# EUROPÄISCHE PATENTANMELDUNG

(11) **EP 4 400 623 A1**
(43) Veröffentlichungstag der Anmeldung: **17.07.2024**
(21) Anmeldenummer: 24151321.7
(22) Anmeldetag: 11.01.2024
(51) Int. Cl.: C22C 38/02, C22C 38/04, C22C 38/06, C22C 38/12, C22C 38/14, F24S 25/61, H02S 20/23

(54) **MONTAGEELEMENT ZUR BEFESTIGUNG VON ZUBEHÖR AUF EINEM GEBÄUDEDACH**

(30) Priorität: 11.01.2023 DE 102023100469
(71) Anmelder: Otto Lehmann GmbH, 93073 Neutraubling (DE)
(72) Erfinder: BIERSACK, Alexander, 93073 Neutraubling (DE)
(74) Vertreter: Benninger, Johannes

(57) **Zusammenfassung**

Es ist ein Montageelement (1) zur Befestigung von Zubehör auf einem Gebäudedach offenbart. Das Montageelement (1) umfasst einen Basisabschnitt (3) mit mindestens einem Durchbruch (9) für eine Schraubverbindung, über welche das Montageelement (1) auf dem Gebäudedach fixierbar ist. Weiter umfasst das Montageelement (1) einen Montageabschnitt (7), ausgebildet zur Koppelung mit dem Dachzubehör und einen Stützabschnitt (5), welcher den Basisabschnitt (3) und den Montageabschnitt (7) miteinander verbindet. Der Stützabschnitt (5) ist gegenüber dem Basisabschnitt (3) und gegenüber dem Montageabschnitt (7) jeweils geneigt. Weiter ist zumindest der Stützabschnitt (5) aus mikrolegiertem Stahl gebildet.

## Beschreibung

Die vorliegende Erfindung betrifft ein Montageelement zur Befestigung von Zubehör auf einem Gebäudedach, ein Verfahren zum Herstellen eines Montageelementes sowie eine Befestigungsanordnung für Dachzubehör.

Eine Befestigung von Solarmodulen, Solarkollektoren zur Wärmegewinnung aus solarer Strahlungsenergie, Schneefanggittern oder weiterer Dachzubehörelemente erfolgt in der Regel mittels spezieller Halteelemente, die durch Haken oder ähnliche Trägerbauteile ausgebildet sein können. Hierzu werden im Stand der Technik häufig Dacheindeckungselemente vom jeweiligen Gebäudedach abgenommen und mit einer entsprechenden Aussparung versehen. Hierauf folgend wird der Haken bzw. Dachhaken an einem Sparen verschraubt, und das bearbeitete Dacheindeckungselemente wieder auf dem Gebäudedach angeordnet, so dass sich der Haken bzw. Dachhaken in der Aussparung befindet.

Die Praxis hat gezeigt, dass solche Montageelemente häufig mit großer Stärke und entsprechend hohem Materialverbrauch gefertigt werden, um ein sicheres Halten des jeweiligen Dachzubehörs auf dem jeweiligen Gebäudedach gewährleisten zu können. Fertigungsmaßnahmen für solche Montageelemente sind häufig umständlich und zeitaufwändig, da sich Materialen mit großer Stärke nur mit hohen Kräften bearbeiten lassen und einen großen Widerstand aufweisen.

Eine Aufgabe der Erfindung besteht somit darin, eine Möglichkeit bereitzustellen, mit welcher sich die genannten Nachteile zumindest reduzieren lassen.

Die obige Aufgabe wird durch die Gegenstände gelöst, welche die Merkmale in den unabhängigen Ansprüchen umfassen. Weitere vorteilhafte Ausgestaltungen werden durch die Unteransprüche beschrieben.

Die Erfindung betrifft ein Montageelement zur Befestigung von Zubehör auf einem Gebäudedach. Das Montageelement umfasst einen Basisabschnitt mit mindestens einem Durchbruch für eine Schraubverbindung, über welche das Montageelement auf dem Gebäudedach fixierbar ist. Weiter umfasst das Montageelement einen Montageabschnitt, ausgebildet zur Koppelung mit dem Dachzubehör und einen Stützabschnitt, welcher den Basisabschnitt und den Montageabschnitt miteinander verbindet. Der Stützabschnitt ist gegenüber dem Basisabschnitt und gegenüber dem Montageabschnitt jeweils geneigt.

Es ist vorgesehen, dass zumindest der Stützabschnitt aus mikrolegiertem Stahl gebildet ist. In bevorzugten Ausführungsformen kann es sein, dass das Montageelement vollständig aus mikrolegiertem Stahl gebildet ist. Hierdurch besitzt das Montageelement eine hohe Stabilität und kann selbst bei reduzierter Stärke das jeweilige Dachzubehör sicher auf dem jeweiligen Gebäudedach halten.

Der Stützabschnitt kann einen ersten Abschnitt und einen zweiten Abschnitt umfassen. Der erste Abschnitt kann gegenüber dem Basisabschnitt um 90° oder zumindest näherungsweise 90° geneigt sein und an den Basisabschnitt anschließen. Der zweite Abschnitt kann an den ersten Abschnitt anschließen und gegenüber dem ersten Abschnitt mit derselben Neigungsrichtung geneigt bzw. weiter geneigt sein. An den zweiten Abschnitt kann wiederum der Montageabschnitt anschließen. Der Montageabschnitt kann in entgegengesetzter Richtung gegenüber dem zweiten Abschnitt geneigt sein. Der erste Abschnitt kann zumindest bereichsweise oder sogar vollständig einen gewölbten Verlauf besitzen. Alternativ oder ergänzend hierzu kann der zweite Abschnitt zumindest bereichsweise einen gewundenen Verlauf besitzen und/oder zumindest bereichsweise einen gewölbten Verlauf besitzen. Insbesondere kann es sein, dass der zweite Abschnitt zumindest bereichsweise oder sogar vollständig dort einen gewundenen Verlauf besitzt, wo der zweite Abschnitt zudem gewölbt ist. Die Wölbung kann sich somit in diversen Ausführungsformen unterbrechungsfrei über den ersten Abschnitt und über den zweiten Abschnitt erstrecken.

Es kann sein, dass der mikrolegierte Stahl mindestens einen der nachfolgenden Bestandteil mit dem jeweils angegebenem Massenanteil aufweist:
- C zwischen 0% bis maximal 0,12%;
- Si zwischen 0% bis maximal 0,5%;
- Mn zwischen 0% bis maximal 1,6%;
- P zwischen 0% und maximal 0,025%;
- Nb zwischen 0% und maximal 0,09%;
- Ti zwischen 0% und 0,15%.

Hierbei können die obig genannten Bestandteile mit dem angegebenen Massenanteil in beliebiger Kombination vorliegen. Auch kann der mikrolegierte Stahl lediglich einen der genannten Bestandteile mit dem angegebenen Massenanteil aufweisen. Auch kann es sein, dass der mikrolegierte Stahl sämtliche der obig genannten Bestandteile mit dem jeweils angegebenem Massenanteil aufweist. Bei dem mikrolegierten Stahl kann es sich um S420MC handeln. Dieser mikrolegierte Stahl hat sich besonders bewährt, um ein Montageelement einfach fertigen zu können, welches Montageelement auch bei reduzierter Stärke eine hohe Stabilität und Zuverlässigkeit besitzt.

Weiter kann es sein, dass der mikrolegierte Stahl mindestens einen der nachfolgenden Bestandteile mit dem jeweils angegebenen Massenanteil aufweist:
- C von zumindest näherungsweise 0,12% oder zumindest näherungsweise 0,20% und/oder
- Mn von zumindest näherungsweise 1,30% oder zumindest näherungsweise 1,50% oder zumindest näherungsweise 1,60% oder zumindest näherungsweise 1,70% oder zumindest näherungsweise 1,80% oder zumindest näherungsweise 1,90% oder zumindest näherungsweise 2,0% oder zumindest näherungsweise 2,10% oder zumindest näherungsweise 2,20% und/oder
- Si von zumindest näherungsweise 0,50% oder zumindest näherungsweise 0,60% und/oder
- P von zumindest näherungsweise 0,025% und/oder
- S von zumindest näherungsweise 0,010% oder zumindest näherungsweise 0,015% oder zumindest näherungsweise 0,020% und/oder
- Al von zumindest näherungsweise 0,015% und/oder
- Nb von zumindest näherungsweise 0,09% und/oder
- V von zumindest näherungsweise 0,20% und/oder
- Ti von zumindest näherungsweise 0,15% oder von zumindest näherungsweise 0,22% oder von zumindest näherungsweise 0,25% und/oder
- Mo von zumindest näherungsweise 0,50% oder von zumindest näherungsweise 1,00% und/oder
- B von zumindest näherungsweise 0,005%.

Hierbei können die obig genannten Bestandteile mit dem angegebenen Massenanteil in beliebiger Kombination vorliegen. Auch kann der mikrolegierte Stahl lediglich einen der genannten Bestandteile mit dem angegebenen Massenanteil aufweisen. Auch kann es sein, dass der mikrolegierte Stahl sämtliche der obig genannten Bestandteile mit dem jeweils angegebenem Massenanteil aufweist.

Bei dem mikrolegierten Stahl kann es sich um S315MC, um S355MC, um S420MC, um S460MC, um S500MC, um S550MC, um S600MC, um S650MC, um S700MC, um S900MC oder um S960MC handeln. Diese mikrolegierten Stähle haben sich jeweils bewährt, um ein Montageelement einfach fertigen zu können, welches Montageelement auch bei reduzierter Stärke eine hohe Stabilität und Zuverlässigkeit besitzt.

Weiter hat es sich bewährt, wenn eine Stärke des Stützabschnittes oder eine Stärke des gesamten Montageelementes maximal 5mm und insbesondere maximal 4mm oder zumindest näherungsweise 4mm beträgt. Solch ein Montageelement besitzt eine geringe Masse bei gleichzeitig hoher Stabilität. Da bei einer solchen Stärke eines Montageelementes gegenüber aus dem Stand der Technik bekannten Montageelementen ein vergleichsweise geringer Aufwand an Material zur Fertigung besteht, kann ein solches Montageelement auch kostengünstig hergestellt werden.

Auch kann der Montageabschnitt eine Kontaktfläche aufweisen, welche zur Anlage einer am Montageelement zu befestigenden Profilschiene ausgebildet ist. Die Kontaktfläche kann mehrere Rillen aufweisen, die durch Rollformen im Bereich der Kontaktfläche des Montageabschnittes geformt sind. In diversen Ausführungsformen kann es hierbei sein, dass der Montageabschnitt zwei Schenkel besitzt, die zumindest näherungsweise um 90° zueinander geneigt sind. Jeder dieser zwei Schenkel kann eine jeweilige Kontaktfläche aufweisen, welche zur Anlage einer am Montageelement zu befestigenden Profilschiene ausgebildet ist. Die jeweilige Kontaktfläche kann mehrere Rillen aufweisen, die durch Rollformen im Bereich der jeweiligen Kontaktfläche des Montageabschnittes geformt sind. Hierdurch besteht die Möglichkeit, an einem ersten Schenkel eine Profilschiene zu befestigen, die in Richtung eines Dachfirstes weist. Der zweite Schenkel kann zur Befestigung einer Profilschiene ausgebildet sein, die horizontal orientiert ist bzw. die in etwa parallel zu einer Dachlatte verläuft.

Wie es vorhergehend bereits erwähnt wurde, kann der Stützabschnitt zumindest bereichsweise einen gewölbten Verlauf besitzen. Hierdurch lässt sich auf einfache Art und Weise die Stabilität des Montageelementes weiter verbessern.

Weiter kann der Stützabschnitt zumindest bereichsweise einen gewundenen Verlauf besitzen, was eine alternative oder ergänzende Möglichkeit zum gewölbten Verlauf sein kann, um auf einfache Art und Weise die Stabilität des Montageelementes zusätzlich zu verbessern.

In der Praxis haben sich Ausführungsformen bewährt, bei denen der Stützabschnitt zumindest in einem bestimmten Bereich sowohl einen gewölbten Verlauf als auch einen gewundenen Verlauf besitzt. Solche Ausführungsformen besitzen eine besonders hohe Stabilität. Die Stärke des verwendeten Materials für das Montageelement lässt sich hierdurch weiter reduzieren.

Die Erfindung betrifft zudem eine Befestigungsanordnung für Dachzubehör. Die Befestigungsanordnung umfasst ein Montageelement gemäß einem Ausführungsbeispiel der vorherigen Beschreibung. Weiter umfasst die Befestigungsanordnung ein Dacheindeckungselement, an dem das Montageelement angeordnet ist und/oder das mit dem Montageelement verspannbar ist. Hierbei kann es sein, dass das Montageelement an dem Dacheindeckungselement über eine Nietverbindung und/oder über eine Schweißverbindung und/oder über eine weitere Verbindung angeordnet ist. Bei dem Dacheindeckungselement kann es sich insbesondere um einen Blechziegel handeln.

Das Dacheindeckungselement bzw. der Blechziegel kann die nachfolgenden Bestandteile mit dem angegebenen Massenanteil aufweisen:
- C von zumindest näherungsweise 0,12% und/oder
- Si von zumindest näherungsweise 0,5% und/oder
- Mn von zumindest näherungsweise 0,6% und/oder
- P von zumindest näherungsweise 0,1% und/oder
- S von zumindest näherungsweise 0,045% und/oder
- Ti von zumindest näherungsweise 0,1 %.

Bei dem für das Dacheindeckungselement bzw. für den Blechziegel verwendeten Material kann es sich beispielsweise um DX54D handeln. Insbesondere kann es sich bei dem für das Dacheindeckungselement bzw. für den Blechziegel verwendeten Material um DX54D mit einer Oberflächenauflage ZM250MAC handeln.

Das Dacheindeckungselement bzw. der Blechziegel kann verzinkt sein. Auch ist denkbar, dass das verzinkte Dacheindeckungselement bzw. der verzinkte Blechziegel zusätzlich pulverbeschichtet ist. Solche Ausführungsformen zeichnen sich durch eine hohe Korrosionsbeständigkeit aus.

Es kann sein, dass das Dacheindeckungselement bzw. der Blechziegel auf seiner Oberfläche eine Kristallstruktur ausbildet, die in der Praxis auch als Zinkblume bezeichnet wird. Die einzelnen Kristalle der Kristallstruktur können durch gezielte Beeinflussung des Erstarrungsvorgangs verkleinert werden, so dass diese mit bloßem Auge nicht mehr zu erkennen sind. Sofern das Dacheindeckungselement verzinkt ist und zusätzlich mit einer Pulverbeschichtung versehen ist, wird die Verzinkung von der Pulverbeschichtung verdeckt. Die Zinkblume ist somit unabhängig von ihrer Kristallstruktur nicht mehr zu erkennen.

Die Befestigungsanordnung kann eine Befestigungsschiene bzw. eine Verstärkungsschiene umfassen, welche zur Auflage und Fixierung an einer Dachlatte ausgebildet ist. Die Befestigungsschiene kann mehrere Aussparungen besitzen, von denen wenigstens eine Aussparung fluchtend zu dem mindestens einen Durchbruch des Basisabschnittes ausrichtbar ist, so dass wenigstens eine Schraubverbindung die jeweilige Aussparung und den jeweiligen Durchbruch gemeinsam durchsetzen kann.

Weiter kann die Befestigungsanordnung ein Auflageelement umfassen. Das Auflageelement kann mit dem Dacheindeckungselement fest verbunden sein. Weiter können das Auflageelement und das Montageelement auf gegenüberliegenden Seiten des Dacheindeckungselementes angeordnet sein. Das Montageelement kann an einer oberen Seite des Dacheindeckungselementes angeordnet sein, wohingegen das Auflageelement an einer unteren Seite des Dacheindeckungselementes angeordnet ist. Das Auflageelement kann derart ausgestaltet sein, dass es auf der vorherig bereits erwähnten Befestigungsschiene und/oder auf einem Dachsparren aufliegt, wenn das Montageelement, das Dacheindeckungselement, das Auflageelement und die Befestigungsschiene mit einer Dachlatte verbunden und gegeneinander verspannt sind.

Auch kann es sein, dass das Dacheindeckungselement mehrere Öffnungen zur Befestigung des Dacheindeckungselementes über Schraubverbindungen ausbildet, wobei im Bereich einer jeweiligen Öffnung eine Ringdichtung angeordnet ist, die insbesondere durch ein Elastomer ausgebildet ist. Mit solchen Ausführungsformen kann mit hoher Sicherheit gewährleistet werden, dass im Bereich der Befestigungsanordnung kein Wasser in eine Dachhaut eindringt, wenn die Befestigungsanordnung auf einem Gebäudedach installiert ist.

Zudem betriff die Erfindung eine Verwendung eines Montageelementes gemäß einem der vorherig genannten Ausführungsbeispiele zur Befestigung eines Zubehörs auf einem Gebäudedach, welches Zubehör als PV-Modul bzw. als Solarmodul ausgebildet ist.

Auch betrifft die Erfindung ein Verfahren zum Herstellen eines Montageelementes, welches zur Befestigung von Zubehör auf einem Gebäudedach ausgebildet ist. Die Erfindung kann hierbei insbesondere ein Verfahren zum Herstellen eines Montageelementes gemäß einem der vorherig beschriebenen Ausführungsbeispiele betreffen.

Bei dem Verfahren wird ein Materialstreifen aus mikrolegiertem Stahl bereitgestellt. Weiter erfolgt ein mehrfaches Einwirken auf den bereitgestellten Materialstreifen mittels eines Folgeverbundwerkzeugs, wobei mittels des Folgeverbundwerkzeugs im Materialstreifen aufeinanderfolgend mehrere Montageelemente gemäß einem Ausführungsbeispiel der voranstehenden Beschreibung ausgebildet und vom Materialstreifen abgetrennt werden.

Es hat sich bewährt, wenn über das Folgeverbundwerkzeug durch Rollformen mehrere Rillen derart in den Materialstreifen eingebracht werden, dass sich die Rillen nach Abtrennen des jeweiligen Montageelementes vom Materialstreifen an einer Kontaktfläche des Montageabschnittes befinden, welcher zur Anlage einer am Montageelement zu befestigenden Profilschiene ausgebildet ist.

Weiter kann es sein, dass der Materialstreifen aus mikrolegiertem Stahl mindestens einen der folgenden Bestandteile mit dem jeweils angegebenem Massenanteil aufweist:
- C zwischen 0% bis maximal 0,12%;
- Si zwischen 0% bis maximal 0,5%;
- Mn zwischen 0% bis maximal 1,6%;
- P zwischen 0% und maximal 0,025%;
- Nb zwischen 0% und maximal 0,09%;
- Ti zwischen 0% und 0,15%.

Bei dem mikrolegierten Stahl des Materialstreifens kann es sich um S420MC handeln. Der Materialstreifen kann eine beliebige Kombination der erwähnten Bestandteile mit dem jeweiligen zugehörigen Massenanteil aufweisen. Weiter kann der mikrolegierte Stahl auch lediglich einen der obig genannten Bestandteile mit dem vorgegebenen Massenanteil aufweisen. Auch kann es sein, dass der mikrolegierte Stahl des Materialstreifens sämtliche der angegebenen Bestandteile mit dem jeweils zugehörigen Massenanteil aufweist.

Weiter kann es sein, dass der Materialstreifen aus mikrolegiertem Stahl mindestens einen der folgenden Bestandteile mit dem jeweils angegebenem Massenanteil aufweist:
Weiter kann es sein, dass der mikrolegierte Stahl mindestens einen der nachfolgenden Bestandteile mit dem jeweils angegebenen Massenanteil aufweist:
- C von zumindest näherungsweise 0,12% oder zumindest näherungsweise 0,20% und/oder
- Mn von zumindest näherungsweise 1,30% oder zumindest näherungsweise 1,50% oder zumindest näherungsweise 1,60% oder zumindest näherungsweise 1,70% oder zumindest näherungsweise 1,80% oder zumindest näherungsweise 1,90% oder zumindest näherungsweise 2,0% oder zumindest näherungsweise 2,10% oder zumindest näherungsweise 2,20% und/oder
- Si von zumindest näherungsweise 0,50% oder zumindest näherungsweise 0,60% und/oder
- P von zumindest näherungsweise 0,025% und/oder
- S von zumindest näherungsweise 0,010% oder zumindest näherungsweise 0,015% oder zumindest näherungsweise 0,020% und/oder
- AI von zumindest näherungsweise 0,015% und/oder
- Nb von zumindest näherungsweise 0,09% und/oder
- V von zumindest näherungsweise 0,20% und/oder
- Ti von zumindest näherungsweise 0,15% oder von zumindest näherungsweise 0,22% oder von zumindest näherungsweise 0,25% und/oder
- Mo von zumindest näherungsweise 0,50% oder von zumindest näherungsweise 1,00% und/oder
- B von zumindest näherungsweise 0,005%.

Hierbei können die obig genannten Bestandteile mit dem angegebenen Massenanteil in beliebiger Kombination vorliegen. Auch kann der mikrolegierte Stahl des Materialstreifens lediglich einen der genannten Bestandteile mit dem angegebenen Massenanteil aufweisen. Auch kann es sein, dass der mikrolegierte Stahl des Materialstreifens sämtliche der obig genannten Bestandteile mit dem jeweils angegebenem Massenanteil aufweist.

Bei dem mikrolegierten Stahl kann es sich um S315MC, um S355MC, um S420MC, um S460MC, um S500MC, um S550MC, um S600MC, um S650MC, um S700MC, um S900MC oder um S960MC handeln. Diese mikrolegierten Stähle haben sich jeweils bewährt, um ein Montageelement einfach fertigen zu können, welches Montageelement auch bei reduzierter Stärke eine hohe Stabilität und Zuverlässigkeit besitzt.

Alternativ oder ergänzend hierzu kann es sein, dass der bereitgestellte Materialstreifen eine Stärke von maximal 5mm und insbesondere maximal 4mm oder zumindest näherungsweise 4mm besitzt.

Weiter kann es sein, dass auf dem Materialstreifen mittels des Folgeverbundwerkzeuges derart eingewirkt wird, dass der Stützabschnitt im jeweiligen abgetrennten Montageelement zumindest bereichsweise einen gewölbten Verlauf besitzt.

Es haben sich zudem Ausführungsformen bewährt, bei denen auf den Materialstreifen mittels des Folgeverbundwerkzeuges derart eingewirkt wird, dass der Stützabschnitt im jeweiligen abgetrennten Montageelement zumindest bereichsweise einen gewundenen Verlauf besitzt.

Auch ist denkbar, dass auf den Materialstreifen mittels des Folgeverbundwerkzeuges derart eingewirkt wird, dass der Stützabschnitt im jeweiligen abgetrennten Montageelement zumindest bereichsweise dort einen gewölbten Verlauf ausbildet, wo der Stützabschnitt zudem gewunden ist.

In der Praxis haben sich zudem Ausführungsformen bewährt, bei denen auf den Materialstreifen mittels des Folgeverbundwerkzeuges derart eingewirkt wird, dass der Stützabschnitt im jeweiligen abgetrennten Montageelement einen ersten Abschnitt und einen zweiten Abschnitt umfasst. Der erste Abschnitt kann gegenüber dem Basisabschnitt um 90° oder zumindest näherungsweise 90° geneigt sein und an den Basisabschnitt anschließen. Der zweite Abschnitt kann an den ersten Abschnitt anschließen und gegenüber dem ersten Abschnitt mit derselben Neigungsrichtung geneigt bzw. weiter geneigt sein. An den zweiten Abschnitt kann wiederum der Montageabschnitt anschließen. Der Montageabschnitt kann in entgegengesetzter Richtung gegenüber dem zweiten Abschnitt geneigt sein. Der erste Abschnitt kann zumindest bereichsweise oder sogar vollständig einen gewölbten Verlauf besitzen. Alternativ oder ergänzend hierzu kann der zweite Abschnitt zumindest bereichsweise oder sogar vollständig einen gewölbten Verlauf und/oder zumindest bereichsweise oder sogar vollständig gewunden sein. Insbesondere kann es sein, dass der zweite Abschnitt hierbei zumindest bereichsweise oder sogar vollständig dort einen gewundenen Verlauf besitzt, wo der zweite Abschnitt zudem gewölbt ist. In diversen Ausführungsformen kann auf den Materialstreifen mittels des Folgeverbundwerkzeuges derart eingewirkt werden, dass sich die Wölbung unterbrechungsfrei über den ersten Abschnitt und über den zweiten Abschnitt erstreckt, wenn das Montageelement von dem Materialstreifen abgetrennt worden ist.

Bei diversen Ausführungsformen des Verfahrens ist denkbar, dass ein vom Materialstreifen abgetrenntes Montageelement mit einem insbesondere als Blechziegel ausgebildeten Dacheindeckungselement verbunden und insbesondere vernietet wird. Das Dacheindeckungselement kann auch bei dem Verfahren derart ausgebildet sein, wie es vorhergehend zu den Ausführungsformen der erfindungsgemäßen Befestigungsanordnung beschrieben wurde. Auf die vorherig bereits beschriebenen Ausführungsformen kann daher rückverwiesen werden.

Es kann hierbei sein, dass an einer Kontaktfläche des Dacheindeckungselementes, die zur Anlage an einem Dachsparren oder einer Befestigungsschiene vorgesehen ist, mindestens ein Dichtelement befestigt wird. Die Befestigungsschiene kann hierbei gemäß einem Ausführungsbeispiel der vorhergehenden Befestigungsanordnung ausgebildet sein, so dass auf die vorhergehende Beschreibung rückverwiesen werden kann.

Bei solchen Ausführungsformen kann die Wahrscheinlichkeit geringgehalten werden, dass Wasser in eine Dachhaut eindringt, wenn das Dacheindeckungselement auf einem Gebäudedach installiert worden ist. Das mindestens eine Dichtelement kann als Elastomer ausgebildet sein.

Alternativ oder ergänzend hierzu kann es sein, dass das Dacheindeckungselement und das mit dem Dacheindeckungselement verbundene Montageelement gemeinsam pulverbeschichtet werden. Insbesondere kann es sein, dass das Dacheindeckungselement und das mit dem Dacheindeckungselement verbundene Montageelement gemeinsam verzinkt werden und anschließend pulverbeschichtet werden. Solche Ausführungsformen zeichnen sich durch eine hohe Korrosionsbeständigkeit des Dacheindeckungselementes und des mit dem Dacheindeckungselement verbundenen Montageelementes aus.

Zum Pulverbeschichten kann eine Pulverbeschichtungsanlage vorgesehen sein. Das Dacheindeckungselement und das mit dem Dacheindeckungselement verbundene Montageelement können durch die Pulverbeschichtungsanlage mit einer zumindest näherungsweise konstanten Transportgeschwindigkeit bewegt werden, wobei Pulver insbesondere über mehrere Sprühdüsen auf das Dacheindeckungselement und auf das mit dem Dacheindeckungselement verbundene Montageelement aufgebracht wird. Hierdurch lassen sich mittels der Pulverbeschichtung ein Dacheindeckungselement und ein mit dem Dacheindeckungselement verbundenes Montageelement herstellen, die auf ihrer Mantelfläche eine im Wesentlichen gleichmäßige Stärke einer Beschichtung aufweisen. Bewährt haben sich Ausführungsformen, bei denen das Dacheindeckungselement und das mit dem Dacheindeckungselement verbundene Montageelement aufgehängt werden und hängend durch die Pulverbeschichtungsanlage bewegt werden. Insbesondere kann es hierbei sein, dass das Dacheindeckungselement mehrere Öffnungen für Schraubverbindungen aufweist, wobei das Dacheindeckungselement über eine dieser Öffnungen in eine Transporteinrichtung eingehängt wird und zusammen mit dem Montageelement hängend durch die Pulverbeschichtungsanlage bewegt wird.

Nachdem das Pulver auf das Dacheindeckungselement und das mit dem Dacheindeckungselement verbundene Montageelement aufgebracht worden ist, können das Dacheindeckungselement und das mit dem Dacheindeckungselement verbundene Montageelement zusammen mit dem aufgebrachten Pulver die Pulverbeschichtungsanlage verlassen und einem Ofen zugeführt werden. Hierin können das Dacheindeckungselement und das mit dem Dacheindeckungselement verbundene Montageelement mit einer Temperatur beaufschlagt werden, die zwischen 195° C und 220° C und insbesondere im Wesentlichen 205° C beträgt.

Es kann sein, dass das Dacheindeckungselement und das mit dem Dacheindeckungselement verbundene Montageelement den Ofen verlassen und hierauf mit einem Luftvolumenstrom beaufschlagt und gekühlt werden.

Weiter kann das Dacheindeckungselement im Bereich seiner Kontaktfläche mehrere Öffnungen besitzen, übe welche Schraubverbindungen durch das Dacheindeckungselement hindurchtreten können. Bei dem Verfahren können mehrere als Ringdichtungen ausgebildete Dichtelemente vorgesehen sein, die im Bereich der Öffnungen befestigt werden. Eine jeweilige Öffnung einer jeweiligen Ringdichtung kann hierbei mit einer jeweiligen Öffnung des Dacheindeckungselementes fluchten.

Auch haben sich Ausführungsformen bewährt, bei denen aus einem Endlosband an Dichtmaterial die mehreren Ringdichtungen ausgestanzt werden und über ein Saug- und/oder Greifwerkzeug eines Manipulators entgegengenommen, über das Saug- und/oder Greifwerkzeug zum Dacheindeckungselement transportiert und über das Saug- und/oder Greifwerkzeug im Bereich der Öffnungen angeordnet und insbesondere im Bereich der Öffnungen vernietet werden. Bei dem Manipulator kann es sich um einen Knickarmroboter handeln.

Zudem haben sich Ausführungsformen bewährt, bei denen das Dacheindeckungselement und das mit dem Dacheindeckungselement verbundene Montageelement vor der Pulverbeschichtung einer Vorbehandlung unterzogen werden, bei welcher das Dacheindeckungselement und das mit dem Dacheindeckungselemente verbundene Montageelement nass uns insbesondere mit chemischen Zusätzen gereinigt, hierauf folgend in einer Trocknungsanlage getrocknet und dann entlang eines definierten Verbringungsweges zur Pulverbeschichtung einer Pulverbeschichtungsanlage zugeführt werden, so dass eine Temperatur des Dacheindeckungselementes und des mit dem Dacheindeckungselement verbundenen Montageelementes bei Eintritt in die Pulverbeschichtungsanlage zwischen 30° C und 40° C beträgt. Solche Temperaturen haben sich bewährt, um eine optimierte Haftung des Pulvers zu bewirken.

An dieser Stelle sei ergänzend betont, dass Merkmale, welche vorhergehend zu Ausführungsformen des Montageelementes genannt wurden, gleichermaßen Teilaspekte des erfindungsgemäßen Verfahrens sowie der erfindungsgemäßen Befestigungsanordnung betreffen oder sein können. Wenn daher an einer Stell bei der Beschreibung oder auch bei den Anspruchsdefinitionen von einer Ausführungsform des Montageelementes die Rede ist, so gilt dies gleichermaßen für die Ausführungsformen des erfindungsgemäßen Verfahrens und der erfindungsgemäßen Befestigungsanordnung. In umgekehrter Weise gilt dasselbe, so dass auch alle Aspekte und Ausführungsvarianten, die im Zusammenhang mit den Ausführungsformen des erfindungsgemäßen Verfahrens erläutert wurden, gleichermaßen Teilaspekte des erfindungsgemäßen Montageelementes oder der erfindungsgemäßen Befestigungsanordnung betreffen oder sein kann. Wenn daher an einer Stelle bei der Beschreibung oder auch bei den Anspruchsdefinitionen zum Verfahren von bestimmten Aspekten oder Wirkungen die Rede ist, so gilt dies gleichermaßen für das erfindungsgemäßen Montageelement und die erfindungsgemäße Befestigungsanordnung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1a und 1b zeigen perspektivische Ansichten einer Ausführungsform eines erfindungsgemäßen Montageelementes;
Figuren 1c und 1d zeigen Seitenansichten der Ausführungsform eines Montageelementes entsprechend Figuren 1a und 1b;
Figuren 2a bis 2c zeigen schematische Perspektivansichten einer Ausführungsform einer erfindungsgemäßen Befestigungsanordnung;
Figur 2d zeigt eine Schnittdarstellung durch das Ausführungsbeispiel einer Befestigungsanordnung nach Figuren 2a bis 2c;
Figur 3 zeigt eine weitere Ausführungsform einer erfindungsgemäßen Befestigungsanordnung;
Figuren 4 und 5 zeigen eine schematische Ansicht von unten auf ein Dacheindeckungselement, welches als Bestandteil in diversen Ausführungsformen einer erfindungsgemäßen Befestigungsanordnung vorgesehen sein kann;
Figuren 6a und 6b sind schematische Perspektivansichten auf eine Ausführungsform einer Befestigungsschiene, wie sie in diversen Ausführungsformen einer erfindungsgemäßen Befestigungsanordnung vorgesehen sein kann;
Figur 7 zeigt eine Ausführungsform eines Materialstreifens aus mikrolegiertem Stahl und verdeutlicht einzelne Schritte, wie sie in diversen Ausführungsformen des erfindungsgemäßen Verfahrens vorgesehen sein können;
Figuren 8 bis 10 zeigen weitere Aspekte, wie sie in diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

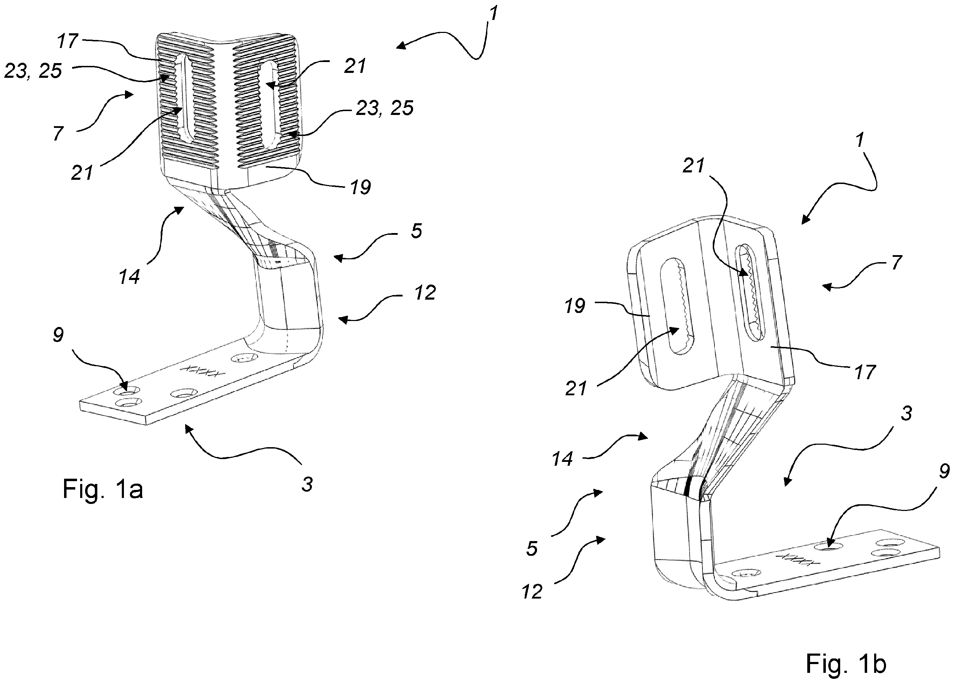

Figuren 1a und 1b zeigen perspektivische Ansichten einer Ausführungsform eines erfindungsgemäßen Montageelementes 1. Das Montageelement 1 ist aus mikrolegiertem Stahl gebildet, vorliegend durch S420MC. Die Stärke des mikrolegierten Stahls beträgt für das gesamte Montageelement 1 5mm.

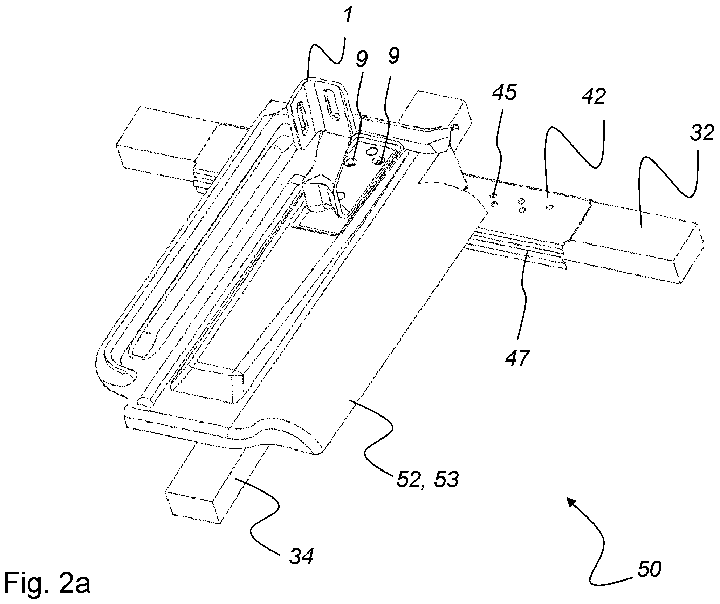

Das Montageelement 1 der Ausführungsform nach Figuren 1a bis 1d umfasst einen Basisabschnitt 3, über den das Montageelement 1 an einer Dachlatte 32 (vgl. Figuren 2a bis 2c) verschraubt werden kann. Für die Schraubverbindungen bildet das Montageelement 1 im Basisabschnitt 3 mehrere Durchbrüche 9 aus. In der Praxis kann ein Dacheindeckungselement bzw. ein Dachziegel von einem Gebäudedach abgenommen und mit einer Ausnehmung versehen werden. Das Montageelement 1 wird hierauf über Schraubverbindungen an einer Dachlatte 32 fixiert. Nachfolgend wird das abgenommene Dacheindeckungselement bzw. der abgenommene Dachziegel erneut auf dem Gebäudedach angeordnet, so dass sich das Montageelement 1 in der Aussparung des Dacheindeckungselementes befindet und aus der Aussparung des Dacheindeckungselementes herausragt. Bei einer solchen Vorgehensweise zur Befestigung von Zubehör auf einem Gebäudedach kann das Montageelement 1 gesondert von einem Dacheindeckungselement 52, wie es in den Figuren 2a bis 5 beschrieben wird, verwendet werden. Es hat sich jedoch bewährt, wenn das Montageelement 1 bereits an einem Dacheindeckungselement 52, wie dies beispielhaft in den Figuren 2a bis 2d gezeigt wird, angeordnet ist und ein bisher am Gebäudedach angeordnetes Dacheindeckungselement durch dieses Dacheindeckungselement 52 mit hieran angeordnetem Montageelement 1 ersetzt wird.

Mit Blick auf das Montageelement 1 nach Figuren 1a bis 1d ist hierin zu erkennen, dass das Montageelement 1 zusätzlich zum Basisabschnitt 3 einen Stützabschnitt 5 umfasst. Der Stützabschnitt 5 umfasst einen ersten Bereich 12, der zumindest näherungsweise um 90° gegenüber dem Basisabschnitt 3 gebogen ist und an den Basisabschnitt 3 anschließt. Der Basisabschnitt 3 und der erste Bereich 12 sind somit L-förmig zueinander orientiert.

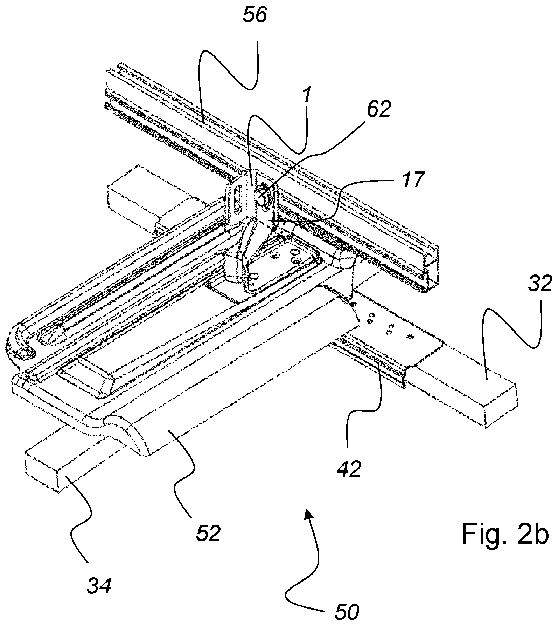

Weiter umfasst der Stützabschnitt 5 des Montageelementes 1 einen zweiten Bereich 14, der an den ersten Bereich 12 des Stützabschnittes 5 anschließt und gegenüber dem ersten Bereich 12 erneut mit derselben Neigungsrichtung gebogen ist. An den zweiten Bereich 14 des Stützabschnittes 5 schließt ein Montageabschnitt 7 an, der zur Befestigung einer Profilschiene 56 (vgl. Figuren 2b bis 2s) dient. Die Profilschiene 56 dient zum Halten eines PV-Moduls, welches als Zubehör auf einem Gebäudedach installiert werden soll.

Wie es in Figuren 1a und 1b jeweils zu erkennen ist, bildet der Stützabschnitt 5 im ersten Bereich 12 und im zweiten Bereich 14 jeweils eine Wölbung aus. Hierdurch lässt sich die Stabilität, welche das Montageelement 1 besitzt, erhöhen, so dass die Materialstärke für das Montageelement 1 gegenüber aus dem Stand der Technik bekannten Montageelementen reduziert gewählt werden kann.

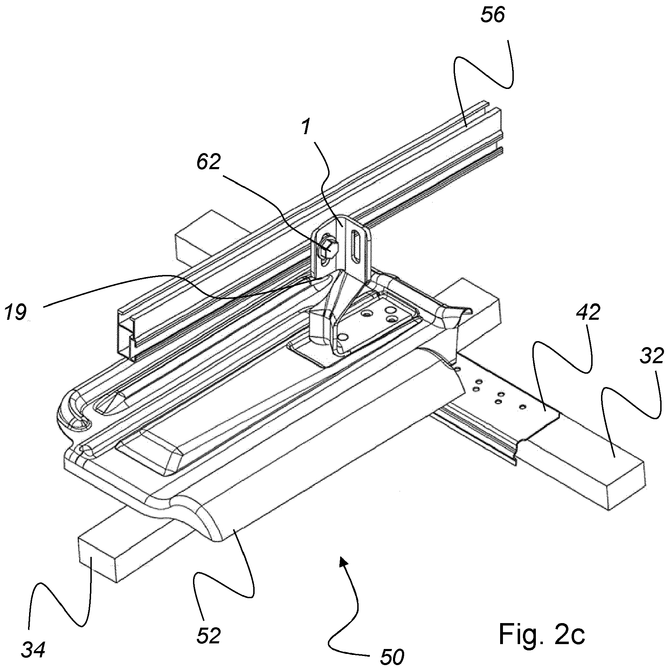

Um eine Profilschiene 56 an dem Montageabschnitt 7 befestigen zu können, bildet der Montageabschnitt 7 bei der Ausführungsform nach Figuren 1a bis 1d zwei Schenkel 17 und 19 aus, in welche jeweils ein Langloch 21 eingebracht ist. Wie es nachfolgend in den Figuren 2b und 2c gezeigt und beschrieben ist, wird in eines der Langlöcher 21 eine Schraubverbindung 62 eingebracht, über welche die Profilschiene 56 sodann am Montageabschnitt 7 gehalten ist.

Jeder der Schenkel 17 und 19 bildet zudem eine Kontaktfläche 23 aus, die mit einer Profilierung 25 versehen ist. Mit der jeweiligen Kontaktfläche 23 kann die Profilschiene 56 flächig in Anlage gebracht werden. Durch die Profilierung 25 im Bereich der jeweiligen Kontaktfläche 23 wird die Haftreibung zwischen dem Montageabschnitt 7 und der Profilschiene 56 erhöht, wodurch die Profilschiene 56 sicher am Montageabschnitt 7 festgesetzt ist, wenn die Profilschiene 56 über eine im Langloch 21 angeordnete Schraubverbindung am Montageelement 1 gehalten wird.

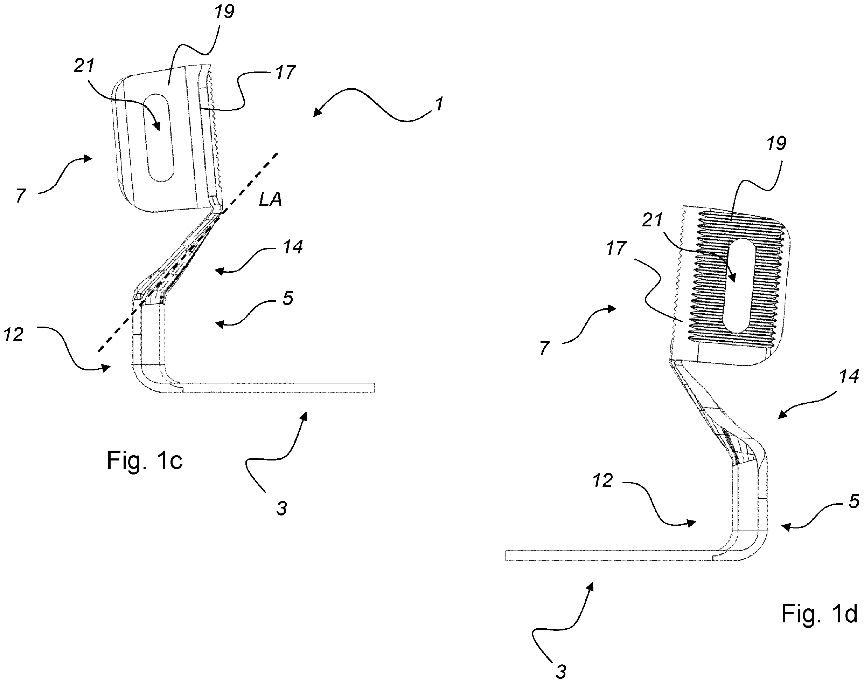

Figuren 1c und 1d zeigen jeweils eine schematische Seitenansicht auf die Ausführungsform eines Montageelementes 1 nach Figuren 1a und 1b. Zu erkennen sind in Figuren 1c und 1d weiterhin der Basisabschnitt 3, der Stützabschnitt 5 und der Montageabschnitt 7, welche gemeinsam das Montageelement 1 ausbilden. Zudem ist in Figuren 1c und 1d der Verlauf des ersten Bereichs 12 und des zweiten Bereichs 14 des Stützabschnittes 5 gut zu erkennen. Wie es vorhergehend bereits erwähnt wurde, bildet der Stützabschnitt 5 im ersten Bereich 12 eine Wölbung aus, wodurch die Stabilität für das Montageelement 1 erhöht wird.

In Figur 1c wird auf eine Längsachse mit LA verwiesen, entlang welcher Längsachse LA sich der zweite Bereich 14 des Stützabschnittes 5 ausgehend vom ersten Bereich 12 in Richtung des Montageabschnittes 7 erstreckt. Wie es Figuren 1c und 1d verdeutlichen, ist der Stützabschnitt 5 im zweiten Bereich um die Längsachse LA gewunden. Eine Zusammenschau der Figur 1b mit Figuren 1c und 1d verdeutlicht zudem, dass der Stützabschnitt 5 in diesem zweiten Bereich 14, in welchem er um die Längsachse LA gewunden ist, zudem eine gewölbte Formgebung besitzt. Eine solche Geometrie sorgt für eine hohe Stabilität des Montageelementes 1 und für eine sichere Befestigung eines über das Montageelement 1 gehaltenen PV-Moduls oder ähnlichen Dachzubehörs. Zudem kann das Montagelement 1 mit geringer Stärke von maximal 5mm oder sogar 4mm gefertigt sein, wodurch das Montageelement 1 gegenüber aus dem Stand der Technik bekannten ähnlichen Montageelementen eine geringere Masse bei höherer Stabilität besitzt. Die Fertigung des Montageelementes 1 durch mikrolegierten Stahl, bei dem es sich vorliegend um S420MC handelt, trägt zusätzlich zur Erhöhung der Stabilität bei und ermöglicht eine Reduzierung der Materialstärke gegenüber aus dem Stand der Technik bekannten Montageelementen. Das Montageelement 1 besitzt daher eine vergleichsweise geringe Masse und ist einfach in der Handhabung, wenn das Montageelement 1 auf einer Dachlatte 32 (vgl. Figur 2b) befestigt werden soll.

Figuren 2a bis 2c zeigen schematische Perspektivansichten einer Ausführungsform einer erfindungsgemäßen Befestigungsanordnung 50. Die Befestigungsanordnung 50 umfasst ein Montageelement 1 gemäß dem vorherigen Ausführungsbeispiel aus Figuren 1a bis 1d. Zu dem Montageelement 1, welches vorliegend als Bestandteil der Befestigungsanordnung 50 ausgebildet ist, kann daher auf die vorherige Beschreibung zu den Figuren 1a bis 1d rückverwiesen werden.

Weiter umfasst die Befestigungsanordnung 50 ein Dacheindeckungselement 52, bei dem es sich um einen Blechziegel 53 handelt. Das Montageelement 1 ist fest mit dem Dacheindeckungselement 52 verbunden und kann als einstückiges Bauteil bereitgestellt werden, wenn mittels der Befestigungsanordnung ein PV-Modul oder ein ähnliches Zubehör auf einem Gebäudedach installiert werden soll. Vorliegend ist das Montageelemente 1 mit Dacheindeckungselement 52 über eine Nietverbindung verbunden. Es kann jedoch auch sein, dass das Montageelement 1 an dem Dacheindeckungselement 52 über eine andere Verbindung, wie beispielsweise eine Schweißverbindung, festgesetzt ist.

Um ein PV-Modul auf einem Gebäudedach zu installieren, wird zunächst ein Dachziegel, welcher bis dahin einen Bestandteil der Dacheindeckung gebildet hat, vom jeweiligen Gebäudedach abgenommen. Ein Dachsparren 34, welcher in Richtung eines Dachfirstes verläuft und eine Dachlatte 32, welche sich oberhalb des Dachsparrens 34 befindet und im Wesentlichen senkrecht zum Dachsparren 34 verläuft, werden freigelegt, wenn das bisherige Dacheindeckungselement vom Gebäudedach abgenommen wird.

Eine als Bestandteil der Befestigungsanordnung 50 ausgebildete Befestigungsschiene 42 wird in einem nächsten Schritt auf die Dachlatte 32, welche eine ungefähr horizontale Verlaufsrichtung besitzt, aufgelegt und über eine Schraubverbindung an der Dachlatte 32 fixiert. Die Befestigungsschiene 42 besitzt eine Sicke 47, welche für eine Versteifung der Befestigungsschiene 42 sorgt und verhindert, dass sich die Befestigungsschiene 42 bei größeren Lasten verformen kann.

Nach Fixierung der Befestigungsschiene 42 an der Dachlatte 32 wird das Dacheindeckungselement 52 zusammen mit dem Montageelement 1 auf die Befestigungsschiene 42 aufgelegt, so dass sich das Dacheindeckungselement 52 ungefähr in einer Position befindet, aus welcher vorhergehend der Dachziegel aus der Dacheindeckung entfernt worden ist. Um das Dacheindeckungselement 52 zusammen mit dem Montageelement 1 auf dem Dachsparren 32 fixieren zu können, werden die beiden in Figur 2a auf Verweis mit Ziffern 9 dargestellten Aussparungen des Montageelementes 1 fluchtend zu einem Paar an Aussparungen 45 der Befestigungsschiene 42 ausgerichtet. Figur 2a lässt hierbei erkennen, dass die Befestigungsschiene 42 eine Vielzahl an Aussparungen 45 besitzt, so dass das Dacheindeckungselement 52 und das Montageelement 1 in mehreren unterschiedlichen Positionen entlang der Längsrichtung der Befestigungsschiene 42 angeordnet und an der Dachlatte 32 fixiert werden können.

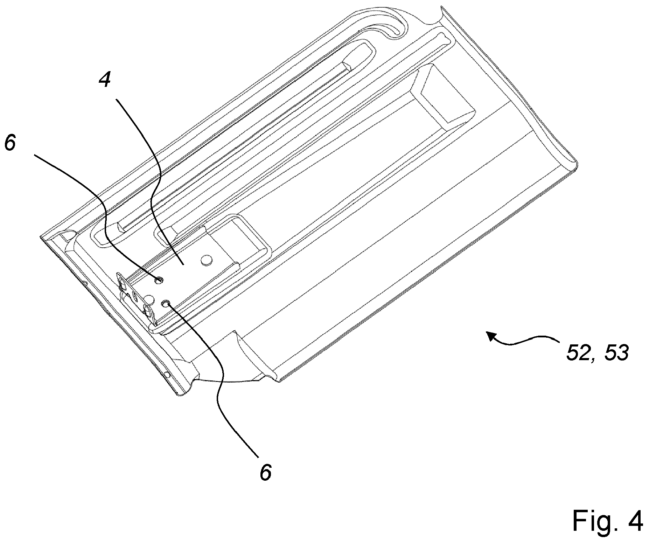

Wie es in Figur 4 gezeigt ist, befindet sich an einer unteren Seite des Dacheindeckungselementes 52 ein Auflageelement 4, das zwei Öffnungen 6 besitzt, die mit den Durchbrüchen 9 des Montageelementes 1 fluchten. Auch diese Öffnungen 6 sind daher fluchtend zu den Aussparungen 45 der Befestigungsschiene 42 orientiert, wenn die Durchbrüche 9 des Montageelementes 1 fluchtend zu den Aussparungen 45 ausgerichtet werden. Das Auflageelement 4 ist über dieselbe Nietverbindung am Dacheindeckungselement 52 fixiert, mit welcher auch das Montageelement 1 mit dem Dacheindeckungselement 52 verbunden ist.

Nachfolgend werden das Dacheindeckungselement 52, das Montageelement 1 und das Auflageelement 4 an dem Dachsparren 32 festgeschraubt, so dass sich Schraubverbindungen in den Durchbrüchen 9, den fluchtend zu diesen Durchbrüchen ausgerichtetem Paar an Aussparungen 45 und den Öffnungen 6 des Auflageelementes 4 befinden. Über eine jeweilige Schraubverbindung werden somit das Dacheindeckungselement 52, das Montageelement 1, die Befestigungsschiene 42 und das Auflageelement 4 jeweils auf dem Dachsparren 32 fixiert und gegeneinander verspannt, wobei die jeweilige Schraubverbindung hierbei das Montageelement 1 über seine Durchbrüche 9 und die Befestigungsschiene 42 über das Paar an Aussparungen 45 sowie das Auflageelement 4 über die Öffnungen 6 durchsetzt.

Eine Befestigung unter Zuhilfenahme einer Befestigungsschiene 42, die auf der Dachlatte 32 aufliegt, hat sich bewährt, da die Befestigungsschiene 42 Querkräfte aufnehmen kann, die ansonsten über das Auflageelement 4 und das damit verbundene Dacheindeckungselement 52 auf die Dachlatte 32 einwirken würden und diese je nach gegebenen Belastungsverhältnissen ggf. überlasten könnten. Während die Befestigungsschiene 42 somit dafür sorgt, dass die Dachlatte 32 nicht überlastet wird, kann durch die entsprechende Formgebung des Stützabschnittes 5 und die materielle Ausgestaltung des Montageelementes 1 durch mikrolegierten Stahl gewährleistet werden, dass das Montageelement 1 hohen Kräften standhalten kann, die insbesondere bei starken Windverhältnissen auftreten können oder bei hohen Schneelasten, die ggf. über ein an dem Montageelement 1 festgesetztes PV-Modul auf das Montageelement 1 einwirken. Wie es vorhergehend bereits erwähnt wurde, kann das Montageelement 1 durch die Formgebung des Stützabschnittes 5 und die Ausbildung durch mikrolegierten Stahl mit geringer Stärke ausgestaltet werden, wodurch das Montageelement 1 eine vergleichsweise geringe Masse besitzt. Im gezeigten Ausführungsbeispiel besitzt das gesamte Montageelement 1 eine Stärke von 5mm, die jedoch in der Praxis ggf. auch auf 4mm weiter reduziert werden kann.

Wenn vorliegend von einem PV-Modul die Rede ist, welches als Dachzubehör mittels des Montageelementes 1 auf einem Gebäudedach gehalten wird, so ist dies nicht einschränkend zu verstehen. Das Montageelement 1 sowie die Befestigungsanordnung 50 können vielmehr zur Fixierung unterschiedlichen Dachzubehörs auf einem Gebäudedach verwendet werden, wozu beispielsweise auch Schneefanggitter, Dachsteigtritte oder anderes Zubehör zählen.

Figuren 2b und 2c zeigen eine Profilschiene 56, die bereits über eine Schraubverbindung 62, bei der es sich vorliegend um einen Außensechskant handelt, am Montageelement 1 festgesetzt ist. In Figur 2b liegt die Profilschiene 56 an dem Schenkel 17 des Montageabschnittes 7 an und verläuft hierbei ungefähr parallel zur Dachlatte 32. Hingegen liegt die Profilschiene 56 in Figur 2c an dem Schenkel 19 des Montageabschnittes 7 an und verläuft hierbei in Richtung eines Dachfirstes bzw. ungefähr parallel zu einem Dachsparren 34. Die Schraubverbindung 62 greift in einen nicht mit dargestellten Schlitten ein, der formschlüssig durch die Profilschiene 56 gehalten wird und entlang der Profilschiene 56 verschoben werden kann. Der Schlitten und die Schraubverbindung 6 stellen daher ein gemeinsames Befestigungsmittel bereit, mit welchem die Profilschiene 56 am Montageabschnitt 7 des Montageelementes 1 fixiert wird.

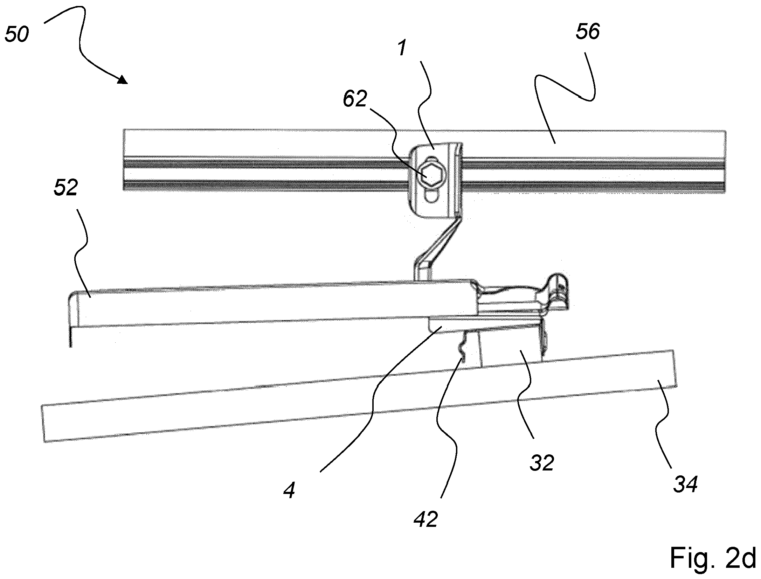

In der Schnittdarstellung nach Figur 2d sind nochmals die Dachlatte 32 und der Dachsparren 34 zu erkennen, wobei sich die Dachlatte 32 oberhalb des Dachsparrens 34 befindet. Die Befestigungsschiene 42 liegt flächig auf der Dachlatte 32 auf und nimmt zusätzlich zur Dachlatte 32 eine Last auf, die über das Montageelement 1 auf die Dachlatte 32 einwirkt. Mit der Befestigungsschiene 42 steht das Auflageelement 4 in Oberflächenkontakt, das gemeinsam mit dem Montageelement 1 und dem Dacheindeckungselement 52 über eine Schraubverbindung an der Dachlatte 32 fixiert ist.

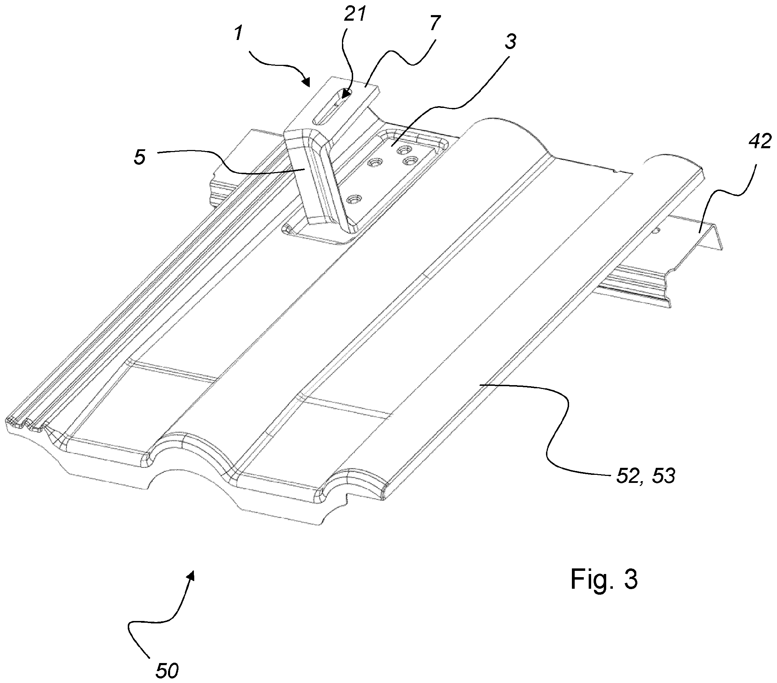

Figur 3 zeigt eine weitere Ausführungsform einer erfindungsgemäßen Befestigungsanordnung 50. Auch die Befestigungsanordnung 50 des Ausführungsbeispiel nach Figur 3 umfasst ein Dacheindeckungselement 52, bei dem es sich um einen Blechziegel 53 handelt sowie ein Montageelement 1 und eine Befestigungsschiene 42. Von der Ausführungsform einer Befestigungsanordnung 50 nach Figuren 2a bis 2d unterscheidet sich die Befestigungsanordnung 50 nach Figur 3 insbesondere durch die Ausgestaltung des Montageelementes 1. Im Ausführungsbeispiel nach Figur 3 ist das Montageelement 1 U-förmig ausgebildet. Es besitzt weiterhin einen Basisabschnitt 3, einen gegenüber dem Basisabschnitt 3 um ungefähr 90° gebogenen Stützabschnitt 5 und einen Montageabschnitt 7. Der Montageabschnitt 7 ist wiederum gegenüber dem Stützabschnitt 5 um 90° gebogen und verläuft daher in etwa parallel zum Basisabschnitt 3. Wenn das Montageelement 1 mit einer Dachlatte 32 verschraubt worden ist, verlaufen somit der Basisabschnitt 3 und der Montageabschnitt 7 jeweils parallel zu einem Dachsparren 34 (vgl. Figuren 2a bis 2d). Auch bei der Ausführungsform nach Figur 3 ist das gesamte Montageelement 1 aus mikrolegiertem Stahl gebildet und besitzt eine Stärke von ungefähr 5mm. Der Stützabschnitt 5 ist gewölbt. Der Montageabschnitt 7 bildet ein Langloch 21 aus, durch welches eine Schraubverbindung 62 (vgl. Figuren 2b bis 2d) hindurchtreten kann, um eine Profilschiene 56 am Montageabschnitt 7 zu fixieren.

Die vorherig bereits erwähnte Ansicht von unten auf eine Dacheindeckungselement 52 nach Figur 4 zeigt nochmals das Auflageelement 4, welches ein Paar an Öffnungen 6 besetzt. Über eine gemeinsame Nietverbindung sind sowohl das Auflageelement 4 als auch das Montageelement 1 fest am Dacheindeckungselement 52 festgesetzt, so dass die Öffnungen 6 des Auflageelement 4 hierbei mit den Durchbrüchen 9 des Montageelementes 1 fluchten. Hierdurch kann eine Schraubverbindung durch eine jeweilige Öffnung 6 des Auflageelementes 4 und durch einen jeweiligen Durchbruch 9 des Montageelementes 1 gesteckt werden, wenn das Dacheindeckungselement 52, das Auflageelement 4 und das Montageelement 1 mit einer Dachlatte 32 verschraubt werden.

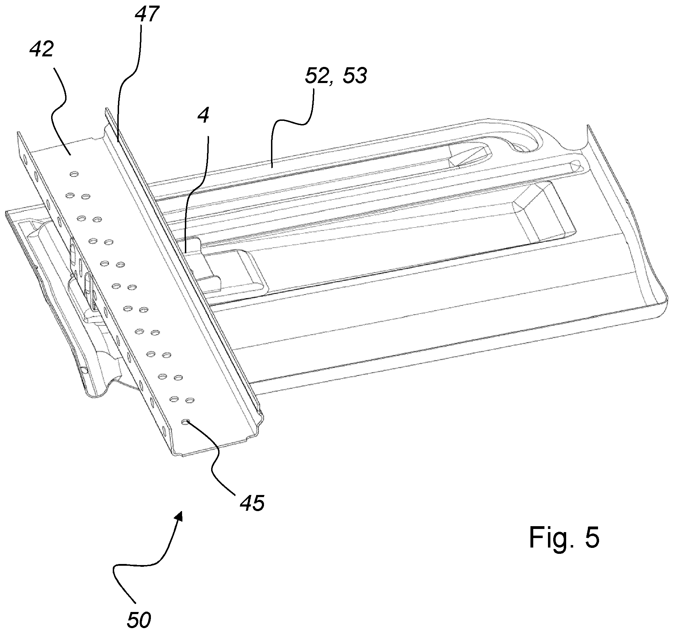

In Figur 5 ist zusätzlich zum Auflageelement 4 und dem Dacheindeckungselement 52 die Befestigungsschiene 42 der Befestigungsanordnung 50 mit dargestellt. Die Aussparungen 45 werden fluchtend zu den Durchbrüchen 9 des Montageelementes 1 und den Öffnungen 6 des Auflageelementes 4 ausgerichtet, wenn die Befestigungsanordnung 50 mit einer Dachlatte 32 verschraubt werden soll.

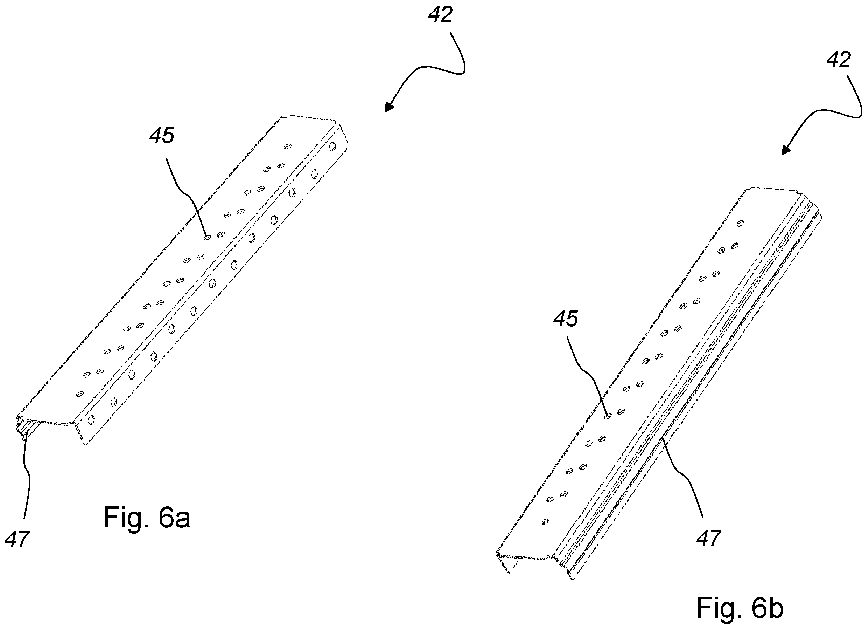

Figuren 6a und 6b sind schematische Perspektivansichten auf eine Ausführungsform einer Befestigungsschiene 42, wie sie in diversen Ausführungsformen einer erfindungsgemäßen Befestigungsanordnung 50 vorgesehen sein kann. Die Befestigungsschiene 42 umfasst eine Vielzahl an Aussparungen 45 für Schraubverbindungen, über welche die Befestigungsschiene 42 mit einer Dachlatte 32 (vgl. Figuren 2a bis 2d) verschraubt werden kann. Weiter umfasst die Befestigungsschiene 42 eine Sicke 47, die für eine Versteifung der Befestigungsschiene 42 sorgt und welche Sicke 47 gewährleistet, dass die Befestigungsschiene 42 ohne wesentliche Verformung auch größere Lasten aufnehmen kann.

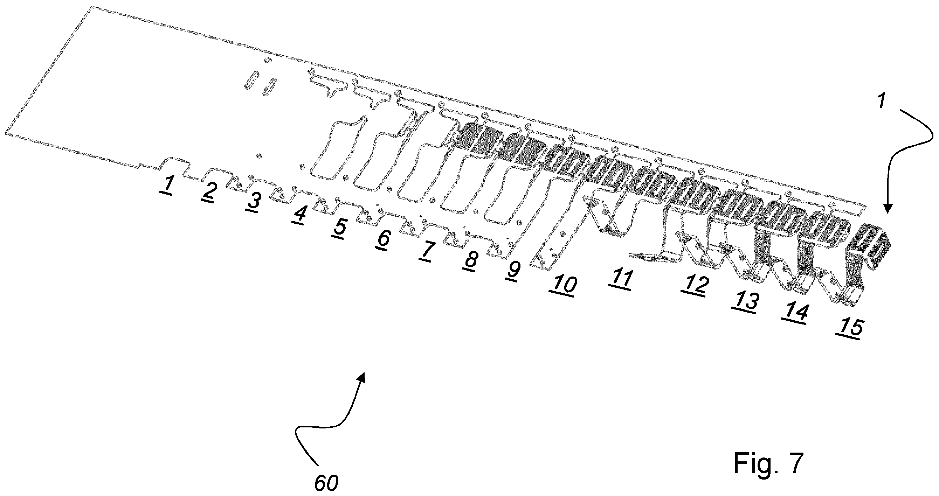

Figur 7 zeigt eine Ausführungsform eines Materialstreifens 60 aus mikrolegiertem Stahl und verdeutlicht einzelne Schritte, wie sie in diversen Ausführungsformen des erfindungsgemäßen Verfahrens vorgesehen sein können. Das Montageelement 1, welches in Figur 7 weiterhin auf Verweis mit Bezugsziffer 1 dargestellt ist, wird mittels eines Folgeverbundwerkzeuges im Materialstreifen 60 ausgebildet und abschließend vom Materialstreifen 60 abgetrennt. Der Materialstreifen 60 besitzt vorliegend eine Stärke von 5mm. Die einzelnen Schritte, mit welchen das Montageelement 1 im Materialstreifen 60 ausgebildet wird, sind zur Verdeutlichung in Figur 7 mit den Ziffern 1 bis 15 durchnummeriert. In den Schritten 1 bis 6 wird die Grundform für das Montageelement 1 ausgebildet, wobei einzelne Partien aus dem Materialstreifen 60 mittels des Folgeverbundwerkzeuges abgetrennt werden. In den Schritten 7 und 8 wird eine Profilierung 25 mittels des Folgeverbundwerkzeuges durch Rollformen in einem Bereich des Materialstreifens 60 ausgebildet, welcher nach Abtrennen des Montageelementes 1 eine Kontaktfläche 23 (vgl. Figuren 1a bis 1d) für eine Profilschiene 56 (vgl. Figuren 2b bis 2d) ausbildet. Im Schritt 9 wird eine weitere Partie aus dem Materialstreifen 60 abgetrennt. In den Schritten 10 bis 14 wird der Materialstreifen 60 in definierten Bereichen gebogen, so dass im Materialstreifen 60 ein Montageelement 1 gemäß dem Ausführungsbeispiel nach Figuren 1a bis 1d gebildet wird. Im abschließenden Schritt 15 wird das im Materialstreifen 60 vollständig ausgebildete Montageelement 1 vom Materialstreifen 60 abgetrennt.

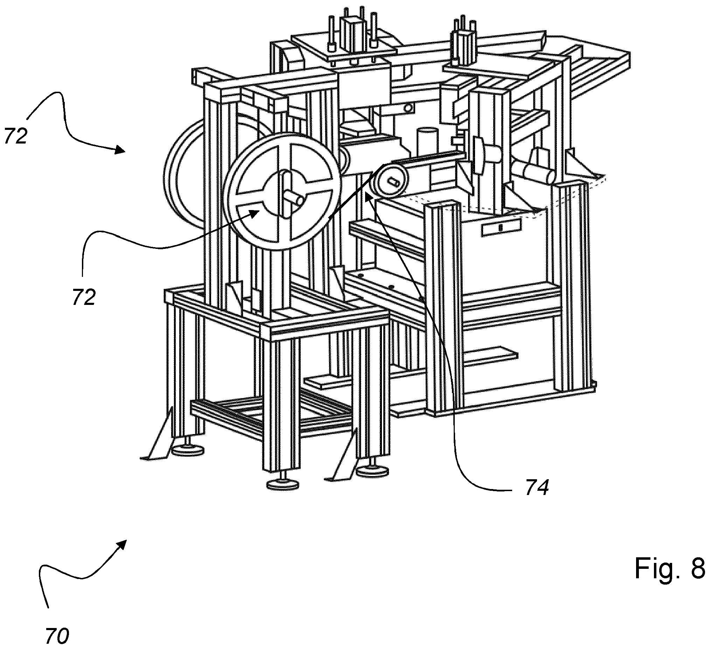

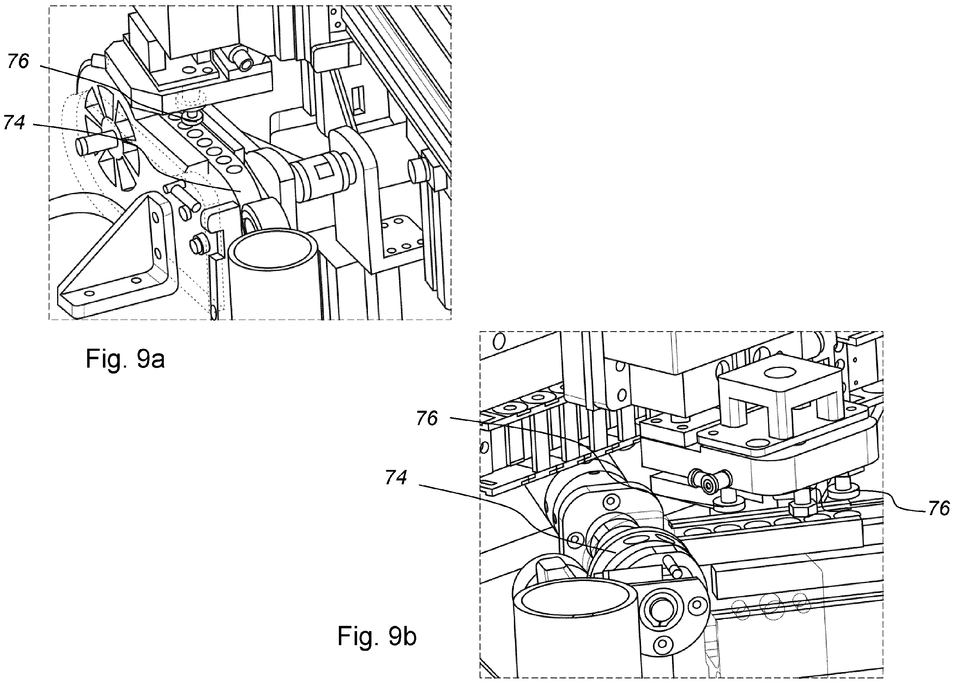

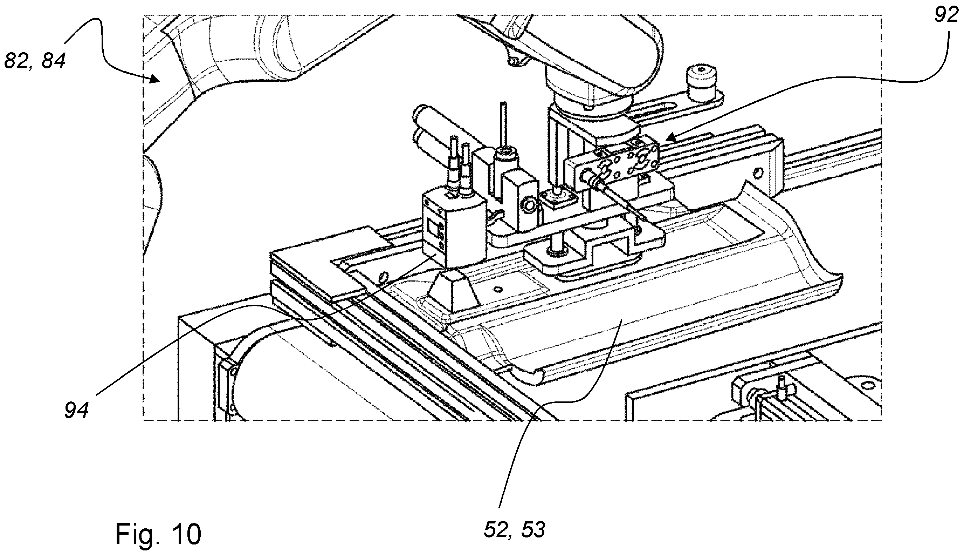

Figuren 8 bis 10 zeigen weitere Aspekte, wie sie in diversen Ausführungsformen des erfindungsgemäßen Verfahrens vorgesehen sein können. In Figur 8 ist eine Anlage 70 zum Aufbringen von Dichtelementen zu erkennen. Die Anlage 70 trägt im Ausführungsbeispiel nach Figur 8 zwei Vorratsrollen 72. Von jeder Vorratsrolle 72 wird ein Endlosband 74 aus Dichtmaterial abgerollt. Wie es Figuren 9a und 9b zeigen, werden über Stanzwerkzeuge 76 als Ringdichtungen ausgebildete Dichtelemente aus dem Endlosband 74 ausgestanzt. Gemäß Figur 9b sind hierzu zwei Stanzwerkzeuge 76 vorgesehen, die zumindest näherungsweise zeitgleich eine jeweilige Ringdichtung aus dem Endlosband 74 ausstanzen. Figur 10 verdeutlicht den weiteren Umgang mit den über die Stanzwerkzeuge 76 ausgestanzten Ringdichtungen. Ein Manipulator 82, bei dem es sich vorliegend um einen Industrieroboter 84 handelt, umfasst ein Verbringungswerkzeug 92. Das Verbringungswerkzeug 92 besitzt ein Saug- und/oder Greifinstrument, über das der Manipulator 82 ausgestanzte Ringdichtungen aufnehmen und zu dem Dacheindeckungselement 52 bewegen kann, bei dem es sich um einen Blechziegel 52 handelt. Im Bereich von Öffnungen 6 (vgl. Figur 4) des Dacheindeckungselementes 52 ordnet der Manipulator 82 die Ringdichtungen am Dacheindeckungselement 52 an und setzt die Ringdichtungen dort fest, so dass jeder Öffnung 6 eine eigene Ringdichtung zugeordnet ist.

Das Verbringungswerkzeug 92 umfasst zudem einen optischen Sensor 94. Nachdem die Ringdichtungen im Bereich der Öffnungen 6 festgesetzt worden sind, wird das Verbringungswerkzeug 92 über den Manipulator 82 derart bewegt, dass sich die Ringdichtungen im Erfassungsbereich des optischen Sensors 94 befinden. Eine in Figur 10 nicht mit dargestellte rechnergestützte Einrichtung kann über den optischen Sensor 94 erkennen, ob sich die Ringdichtungen an einer vorgesehenen Position befinden. Informationen hierzu kann die rechnergestützte Einrichtung an einen Bediener insbesondere akustisch oder visuell ausgeben. Auch kann die rechnergestützte Einrichtung über den optischen Sensor 94 erkennen, ob eine Beschaffenheit einer jeweiligen Ringdichtung vorgegebenen Qualitätskriterien genügt. So kann die rechnergestütze Einrichtung über den optischen Sensor 94 beispielsweise überprüfen, ob die Ringdichtungen einen vorgegebenen Durchmesser besitzen, Risse aufweisen oder weitere Beeinträchtigungen haben, die zu einer mangelhaften Abdichtung führen könnten. Sofern dies der Fall ist, kann die rechnergestützte Einrichtung einen Bediener hierauf hinweisen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Montageelement
- 3: Basisabschnitt
- 4: Auflageelement
- 5: Stützabschnitt
- 6: Öffnungen
- 7: Montageabschnitt
- 9: Durchbruch
- 17: Schenkel
- 19: Schenkel
- 21: Langloch
- 23: Kontaktfläche
- 25: Profilierung
- 32: Dachlatte
- 34: Dachsparren
- 42: Befestigungsschiene
- 45: Aussparung
- 47: Sicke
- 50: Befestigungsanordnung
- 52: Dacheindeckungselement
- 53: Blechziegel
- 56: Profilschiene
- 60: Materialstreifen
- 62: Schraubverbindung
- 70: Anlage zum Aufbringen von Dichtelementen
- 72: Vorratsrolle
- 74: Endlosband
- 76: Stanzwerkzeug
- 82: Manipulator
- 84: Industrieroboter
- 92: Verbringungswerkzeug
- 94: Optischer Sensor
- LA: Achse

## Patentansprüche

1. Montageelement (1) zur Befestigung von Zubehör auf einem Gebäudedach, umfassend einen Basisabschnitt (3) mit mindestens einem Durchbruch (9) für eine Schraubverbindung, über welche das Montageelement (1) auf dem Gebäudedach fixierbar ist, einen Montageabschnitt (7), ausgebildet zur Koppelung mit dem Dachzubehör und einen Stützabschnitt (5), welcher den Basisabschnitt (3) und den Montageabschnitt (7) miteinander verbindet, wobei der Stützabschnitt (5) gegenüber dem Basisabschnitt (3) und gegenüber dem Montageabschnitt (7) jeweils geneigt ist, **dadurch gekennzeichnet, dass** zumindest der Stützabschnitt (5) aus mikrolegiertem Stahl gebildet ist.

2. Montageelement (1) nach Anspruch 1, bei welchem der mikrolegierte Stahl mindestens einen der nachfolgenden Bestandteile mit dem jeweils angegebenem Massenanteil aufweist:
- C zwischen 0% bis maximal 0,12%;
- Si zwischen 0% bis maximal 0,5%;
- Mn zwischen 0% bis maximal 1,6%;
- P zwischen 0% und maximal 0,025%;
- Nb zwischen 0% und maximal 0,09%;
- Ti zwischen 0% und 0,15%.

3. Montageelement nach Anspruch 1, bei welchem der mikrolegierte Stahl mindestens einen der nachfolgenden Bestandteile mit dem jeweils angegebenem Massenanteil aufweist:
- C von zumindest näherungsweise 0,12% oder zumindest näherungsweise 0,20% und/oder
- Mn von zumindest näherungsweise 1,30% oder zumindest näherungsweise 1,50% oder zumindest näherungsweise 1,60% oder zumindest näherungsweise 1,70% oder zumindest näherungsweise 1,80% oder zumindest näherungsweise 1,90% oder zumindest näherungsweise 2,0% oder zumindest näherungsweise 2,10% oder zumindest näherungsweise 2,20% und/oder
- Si von zumindest näherungsweise 0,50% oder zumindest näherungsweise 0,60% und/oder
- P von zumindest näherungsweise 0,025% und/oder
- S von zumindest näherungsweise 0,010% oder zumindest näherungsweise 0,015% oder zumindest näherungsweise 0,020% und/oder
- AI von zumindest näherungsweise 0,015% und/oder
- Nb von zumindest näherungsweise 0,09% und/oder
- V von zumindest näherungsweise 0,20% und/oder
- Ti von zumindest näherungsweise 0,15% oder von zumindest näherungsweise 0,22% oder von zumindest näherungsweise 0,25% und/oder
- Mo von zumindest näherungsweise 0,50% oder von zumindest näherungsweise 1,00% und/oder
- B von zumindest näherungsweise 0,005%.

4. Montageelement (1) nach einem der Ansprüche 1 bis 3, wobei eine Stärke des Stützabschnittes (5) oder eine Stärke des gesamten Montageelementes (1) maximal 5mm und insbesondere maximal 4mm oder zumindest näherungsweise 4mm beträgt.

5. Montageelement nach einem der Ansprüche 1 bis 4, bei welchem der Stützabschnitt (5) zumindest in einem bestimmten Bereich sowohl einen gewölbten Verlauf als auch einen gewundenen Verlauf besitzt.

6. Verwendung eines Montageelementes (1) nach einem der Ansprüche 1 bis 5 zur Befestigung eines Zubehörs auf einem Gebäudedach, welches Zubehör als PV-Modul ausgebildet ist.

7. Befestigungsanordnung (50) für Dachzubehör, umfassend ein Montageelement (1) nach einem der Ansprüche 1 bis 5 sowie ein insbesondere als Blechziegel (53) ausgebildetes Dacheindeckungselement (52), an dem das Montageelement (1) angeordnet ist.

8. Befestigungsanordnung (50) nach Anspruch 7, umfassend eine Befestigungsschiene (42), welche zur Auflage und Fixierung an einer Dachlatte (32) ausgebildet ist, wobei die Befestigungsschiene (42) mehrere Aussparungen (45) besitzt, von denen wenigstens eine Aussparung (45) fluchtend zu dem mindestens einen Durchbruch (9) des Basisabschnittes (3) ausrichtbar ist, so dass wenigstens eine Schraubverbindung die jeweilige Aussparung (45) und den jeweiligen Durchbruch (9) gemeinsam durchsetzen kann.

9. Befestigungsanordnung (50) nach Anspruch 7 oder Anspruch 8, bei der das Dacheindeckungselement (52) mehrere Öffnungen (6) zur Befestigung des Dacheindeckungselementes (52) über Schraubverbindungen ausbildet, wobei im Bereich einer jeweiligen Öffnung (6) eine Ringdichtung angeordnet ist, die insbesondere durch ein Elastomer ausgebildet ist.

10. Verfahren zum Herstellen eines Montageelementes (1), welches zur Befestigung von Zubehör auf einem Gebäudedach ausgebildet ist, das Verfahren umfassend folgende Schritte:
- Bereitstellen eines Materialstreifens (60) aus mikrolegiertem Stahl,
- Mehrfaches Einwirken auf den bereitgestellten Materialstreifen (60) mittels eines Folgeverbundwerkzeugs, wobei mittels des Folgeverbundwerkzeugs im Materialstreifen (60) aufeinanderfolgend mehrere Montageelemente (1) nach einem der Ansprüche 1 bis 5 ausgebildet und vom Materialstreifen (60) abgetrennt werden.

11. Verfahren nach Anspruch 10, bei welchem über das Folgeverbundwerkzeug durch Rollformen mehrere Rillen derart in den Materialstreifen (60) eingebracht werden, dass sich die Rillen nach Abtrennen des jeweiligen Montageelementes (1) vom Materialstreifen (60) an einer Kontaktfläche (23) des Montageabschnittes (7) befinden, welcher zur Anlage einer am Montageelement (1) zu befestigenden Profilschiene (56) ausgebildet ist.

12. Verfahren nach Anspruch 10 oder Anspruch 11, bei welchem der bereitgestellte Materialstreifen (60) aus mikrolegiertem Stahl mindestens einen der folgenden Bestandteile mit dem jeweils angegebenem Massenanteil aufweist:
- C zwischen 0% bis maximal 0,12%;
- Si zwischen 0% bis maximal 0,5%;
- Mn zwischen 0% bis maximal 1,6%;
- P zwischen 0% und maximal 0,025%;
- Nb zwischen 0% und maximal 0,09%;
- Ti zwischen 0% und 0,15%.

13. Verfahren nach Anspruch 10 oder Anspruch 11, bei welchem der bereitgestellte Materialstreifen aus mikrolegiertem Stahl mindestens einen der folgenden Bestandteile mit dem jeweils angegebenem Massenanteil aufweist:
- C von zumindest näherungsweise 0,12% oder zumindest näherungsweise 0,20% und/oder
- Mn von zumindest näherungsweise 1,30% oder zumindest näherungsweise 1,50% oder zumindest näherungsweise 1,60% oder zumindest näherungsweise 1,70% oder zumindest näherungsweise 1,80% oder zumindest näherungsweise 1,90% oder zumindest näherungsweise 2,0% oder zumindest näherungsweise 2,10% oder zumindest näherungsweise 2,20% und/oder
- Si von zumindest näherungsweise 0,50% oder zumindest näherungsweise 0,60% und/oder
- P von zumindest näherungsweise 0,025% und/oder
- S von zumindest näherungsweise 0,010% oder zumindest näherungsweise 0,015% oder zumindest näherungsweise 0,020% und/oder
- AI von zumindest näherungsweise 0,015% und/oder
- Nb von zumindest näherungsweise 0,09% und/oder
- V von zumindest näherungsweise 0,20% und/oder
- Ti von zumindest näherungsweise 0,15% oder von zumindest näherungsweise 0,22% oder von zumindest näherungsweise 0,25% und/oder
- Mo von zumindest näherungsweise 0,50% oder von zumindest näherungsweise 1,00% und/oder
- B von zumindest näherungsweise 0,005%.

14. Verfahren nach einem der Ansprüche 10 bis 13, bei welchem der bereitgestellte Materialstreifen (60) eine Stärke von maximal 5mm und insbesondere maximal 4mm oder zumindest näherungsweise 4mm besitzt.

15. Verfahren nach einem der Ansprüche 10 bis 14, bei dem ein vom Materialstreifen (60) abgetrenntes Montageelement (1) mit einem insbesondere als Blechziegel (53) ausgebildetes Dacheindeckungselement (52) verbunden wird und wobei
- an einer Kontaktfläche des Dacheindeckungselementes (52), die zur Anlage an einem Dachsparren (34) oder einer Befestigungsschiene (42) vorgesehen ist, mindestens ein Dichtelement befestigt wird und/oder wobei
- das Dacheindeckungselement (52) und das mit dem Dacheindeckungselement (52) verbundene Montageelement (1) gemeinsam pulverbeschichtet werden.

16. Verfahren nach Anspruch 15, bei dem das Dacheindeckungselement (52) im Bereich seiner Kontaktfläche mehrere Öffnungen (6) besitzt, über welche Schraubverbindungen durch das Dacheindeckungselement (52) hindurchtreten können und bei welchem Verfahren mehrere als Ringdichtungen ausgebildete Dichtelemente vorgesehen sind, die im Bereich der Öffnungen (6) befestigt werden.

17. Verfahren nach Anspruch 16, bei dem aus einem Endlosband (74) an Dichtmaterial die mehreren Ringdichtungen ausgestanzt werden und über ein Saug- und/oder Greifwerkzeug eines Manipulators (82) entgegengenommen, über das Saug- und/oder Greifwerkzeug zum Dacheindeckungselement (52) transportiert und über das Saug- und/oder Greifwerkzeug im Bereich der Öffnungen (6) angeordnet werden.

18. Verfahren nach einem der Ansprüche 15 bis 17, bei dem das Dacheindeckungselement (52) und das mit dem Dacheindeckungselement (52) verbundene Montageelement (1) vor der Pulverbeschichtung einer Vorbehandlung unterzogen werden, bei welcher das Dacheindeckungselement (52) und das mit dem Dacheindeckungselement (52) verbundene Montageelement (1) nass gereinigt, hierauf folgend in einer Trocknungsanlage getrocknet und dann entlang eines definierten Verbringungsweges zur Pulverbeschichtung einer Pulverbeschichtungsanlage zugeführt werden, so dass eine Temperatur des Dacheindeckungselementes (52) und des mit dem Dacheindeckungselement (52) verbundenen Montageelementes (1) bei Eintritt in die Pulverbeschichtungsanlage zwischen 30° C und 40° C beträgt.
